# EUROPEAN PATENT APPLICATION

(11) **EP 2 015 120 A1**
(43) Date of publication of application: **14.01.2009**
(21) Application number: 08160020.7
(22) Date of filing: 09.07.2008
(51) Int. Cl.: G02B 6/44

(54) **Connecting set for optical fiber cable**

(30) Priority: 09.07.2007 NL 2000738
(71) Applicant: Zweva Engineering B.V., 2517 KX 's-Gravenhage (NL)
(72) Inventor: van 't Veer, Pieter, 2584 AT, Den Haag (NL)
(74) Representative: van Westenbrugge, Andries

(57) **Abstract**

A connecting set (1) for a glass fibre cable (2) comprises a housing composed of several housing parts (3, 4) which can be fitted together and are provided with mutually opposite cable passages (15, 16), a support (8) in the housing, as well as a connecting unit (9) for connecting glass fibres (14) to one another, which connecting unit (9) is supported by the support (8). The support (8) can be connected to the cable passages (15, 16) at both mutually opposite ends (11, 12) in order to ensure a secure positioning of the glass fibre cable (2).

## Description

The invention relates to a connecting set for a glass fibre cable, comprising a housing composed of several housing parts which can be fitted together and are provided with mutually opposite cable passages, a support which extends through the housing, as well as a connecting unit for connecting glass fibres to one another, which connecting unit is supported by the support.

A connecting set of this kind is known, and has several cable passages at each end, each of which is suitable for connecting one or more glass fibre cables. This means that the known connecting set is designed for connections in more than one glass fibre cable, for example six to eight glass fibre cables. As the network of glass fibre cables expands, the number of connections to individual clients also increases. To this end, in each case only one single glass fibre cable is used, so that a connecting set is desirable in this connection which is relatively simple and which is, in particular, suitable for use with a single glass fibre cable.

This object can be achieved by means of a connecting set in which the support is connected to the cable passages at both mutually opposite ends. There, the support is provided with cable guide means, as will be explained below. By means of the support of the connecting set according to the invention, a single glass fibre cable can be connected in a simple and reliable manner, with the support guiding the cable and also protecting it from tensile loads.

According to a preferred embodiment, the cable passages of the housing parts and the ends of the support have matching shapes. These matching shapes lead to a good sealing of the connecting set. In particular, the cable passages of the housing parts and the ends of the support may be accommodated one inside the other to this end. In this case, the ends of the support can extend in an efficient manner through the cable passages of the housing parts. A particularly simple embodiment is produced if the ends of the support and the cable passages are tubular. Such tubular ends of the support act as guide means for the glass fibre cables, as discussed above.

Accommodating and guiding the glass fibre cables is preferably achieved by the fact that the support comprises a tube which has wall apertures which extend between the tubular ends, via which wall apertures the glass fibres are passed out of the tube. In this case, the fragile glass fibres are passed out of the wall apertures and connected to the connecting unit in a well-protected manner. In addition, a pull-relief element which may be provided in a glass fibre cable and which is intended to ensure that the connected glass fibres are not subjected to tensile load, can in that case be attached to said support.

The connecting set can be fitted together in a simple manner if the tubular ends of the support have an external screw thread, which tubular ends protrude from the cable passages and are provided with securing nuts which rest on the cable passages. In order to seal the connecting set in a water-tight manner, a shrink sleeve is preferably provided which extends over the cable passages and over the tubular ends of the support. Alternatively, a gland nut with rubber seals may be used.

In a particularly simple embodiment, two and only two housing parts are provided, each of which is provided with one of the cable passages, which housing parts are connected to one another in a water-tight manner at their end which is turned away from the cable passages. In order to be able to connect the housing parts to one another in a water-tight manner, these are preferably rotationally symmetrical. In particular, they may have circular ends, which can be sealed with respect to one another in a reliable manner by means of an O-ring.

The invention furthermore relates to a connecting structure for a glass fibre cable, comprising a connecting set as described above and glass fibre cables connected to the cable passages. In order to protect such a connecting structure against penetrating moisture, shrink sleeves may be provided on the opposite ends of the connecting set, each of which shrink sleeves extends over a cable passage, the cable guides protruding from the cable passages as well as the glass fibre cables protruding from the cable guides.

The invention will be described in more detail below with reference to an exemplary embodiment illustrated in the figures, in which:
Fig. 1 shows a perspective view of the connecting structure according to the invention, in the assembled state;
Fig. 2 shows the connecting structure in the open position;
Fig. 3 shows an exploded view of the connecting structure;
Fig. 4 shows another exploded view of the connecting structure.

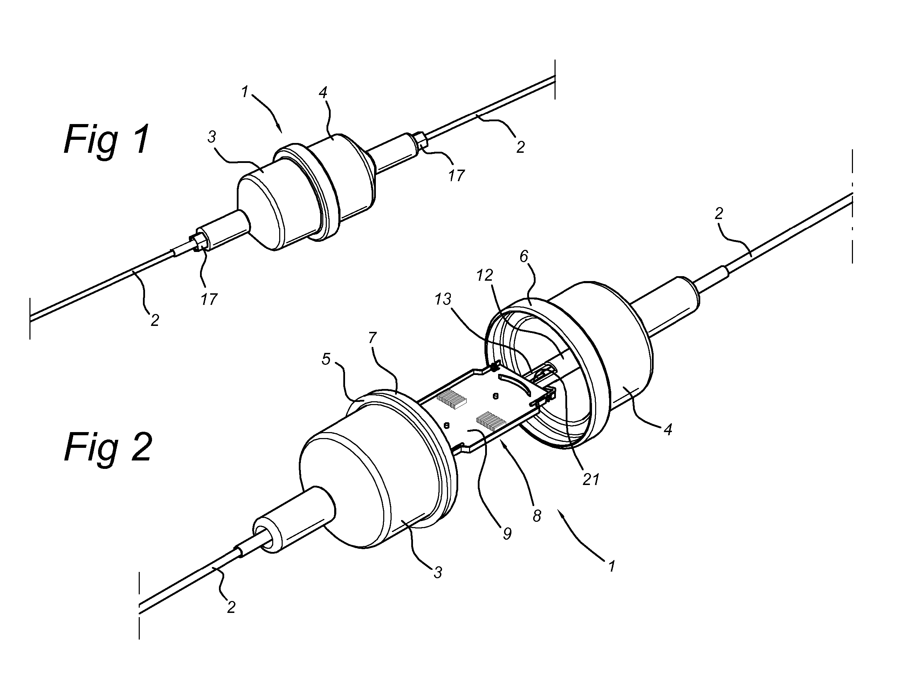

The connecting structure illustrated in Figs. 1 and 2 comprises the connecting set 1 according to the invention, as well as the glass fibre cables 2. The connecting set 1 comprises housing parts 3 and 4 which have ends 5 and 6 which can be attached to one another. The end 6 of the housing part 4 is designed in the shape of a socket, which also accommodates an O-ring 7. The end 5 of the other housing part 3 is placed inside or against the O-ring 7 in the socket 6 and, subsequently, the housing parts 3 and 4 are pressed together, as is described below, as a result of which a water-tight connection is ensured.

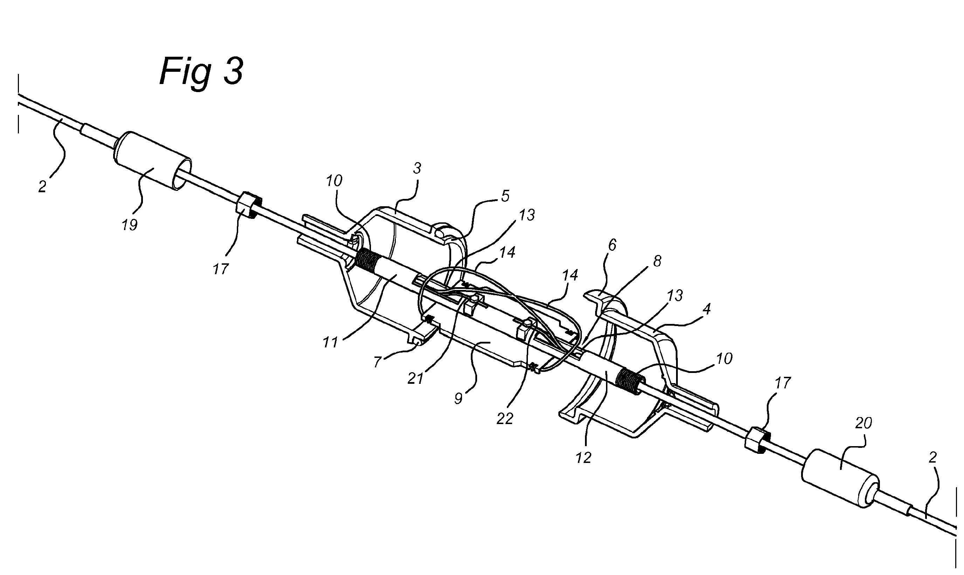

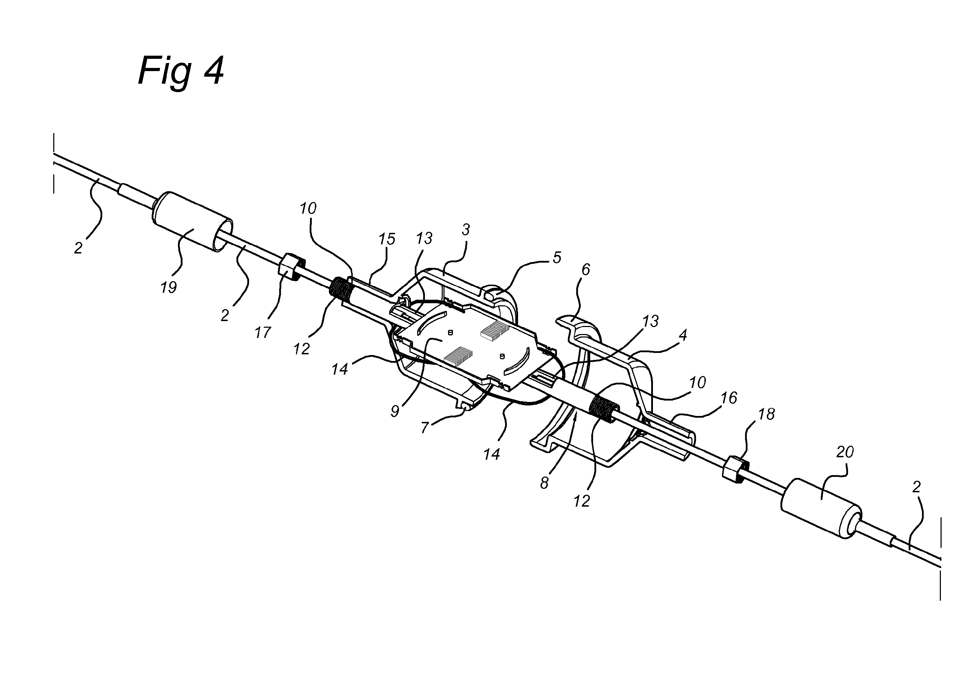

As is illustrated in Figs. 3 and 4, the connecting set 1 furthermore comprises the support 8 and the connecting unit 9 which is attached to the support 8. The support 8 substantially comprises a tube, the ends 11, 12 of which are closed and have an external screw thread 12. Between its ends 11, 12, the tube 8 is provided with wall apertures 13. The glass fibre cables 2 are passed through the ends 11, 12 of the tube 8 which are closed in the peripheral direction, while the glass fibres 14 thereof are passed to the outside through the wall apertures 13 and are passed to the connecting unit 9 by means of an arc having a relatively large radius. There, the glass fibres 14 are connected to one another in a manner known per se, which will not be explained in more detail here, so that light from the one glass fibre 14 can be conducted to the other glass fibre 14.

The reinforcement 21, 22 which may be present in the glass fibre cables 2 is also passed to the outside through the wall apertures 13 and subsequently attached to the support 8, in such a manner that tensile forces in the glass fibre cables 2 can be transmitted without the glass fibres 14 being adversely affected thereby.

At their ends which are turned away from one another, the housing parts 3, 4 are provided with cable passages 15, 16, through which the ends 11, 12 of the tube 8 which are closed in the peripheral direction extend. The shapes of these cable passages 15, 16 and ends 11, 12 are made to match, in such a manner that they are accommodated inside one another in a secure manner. By means of the nuts 17, 18, which are screwed onto the screw thread 10 of the ends 11, 12 and which rest on the end faces of the cable passages 15, 16, the housing parts 3, 4 can be clamped together firmly with the O-ring 7 ensuring a water-tight seal.

Finally, the shrink sleeves 19, 20 can be pushed over the cable passages 15, 16, the parts of the ends 11, 12 of the support 8 protruding therefrom, and the adjacent parts of glass fibre cables 2. After these have been shrunk, the introduction of the glass fibre cables 2 in a water-tight manner in the connecting set 1 is ensured (in Fig. 1, such shrink sleeves are absent).

## Claims

1. Connecting set (1) for a glass fibre cable (2), comprising a housmg composed of several housing parts (3, 4) which can be fitted together and are provided with mutually opposite cable passages (15, 16), a support (8) in the housing, as well as a connecting unit (9) for connecting glass fibres (14) to one another, which connecting unit (9) is supported by the support (8), **characterized in that** the support (8) can be connected to the cable passages (15, 16) at both mutually opposite ends (11, 12).

2. Connecting set according to Claim 1, in which the cable passages (15, 16) of the housing parts (3, 4) and the ends (11, 12) of the support (8) have matching shapes.

3. Connecting set according to Claim 1 or 2, in which the cable passages (15, 16) of the housing parts and the ends (11, 12) of the support (8) can be accommodated one inside the other.

4. Connecting set according to one of the preceding claims, in which the ends (11, 12) of the support (8) extend through the cable passages (15, 16) of the housing parts (3, 4).

5. Connecting set according to one of the preceding claims, in which the ends (11, 12) of the support (8) and the cable passages (15, 16) of the housing parts (3, 4) are tubular.

6. Connecting set according to Claim 5, in which the support comprises a tube (8) which has wall apertures (13) which extend between tubular ends (11, 12), via which wall apertures (13) the glass fibres (14) can be passed out of the tube (8).

7. Connecting set according to Claim 6, in which the glass fibres (14) can be passed out of the wall apertures (13) and can be attached to the connecting unit (9).

8. Connecting set according to Claim 6 or 7, in which the pull-relief element (21, 22) of the glass fibre cables (2) can be attached to the support (8).

9. Connecting set according to one of Claims 6-8, in which the tubular ends (11, 12) of the support (8) have an external screw thread (10), which tubular ends (11, 12) can protrude from the cable passages (15, 16) and are provided with securing nuts (17, 18) which can rest on the cable passages (15,16).

10. Connecting set according to one of Claims 5-9, in which shrink sleeves (19,20) are provided which can be arranged over the cable passages (15,16) and over tubular ends (11,12) of the support (8).

11. Connecting set according to one of the preceding claims, in which two and only two housing parts (3,4) are provided, each of which is provided with one of the cable passages (15,16), which housing parts (3,4) are connected to one another in a water-tight manner at their end which is turned away from the cable passages (15,16).

12. Connecting set according to Claim 11, in which the housing parts (3, 4) are rotationally symmetrical.

13. Connecting structure, comprising a connecting set (1) according to one of the preceding claims which is fitted together and glass fibre cables (2) connected to the cable passages (15,16), which connecting set comprises several housing parts (3, 4) which are fitted together and provided with mutually opposite cable passages (15, 16), a support (8) in the housing, as well as a connecting unit (9) which is supported by the support (8) and by means of which glass fibres (14) are interconnected, **characterized in that** the support (8) is connected to the cable passages (15, 16) at both mutually opposite ends (11, 12).

14. Connecting structure according to Claim 13, in which shrink sleeves (19, 20) are provided on the opposite ends of the connecting set (1), each of which shrink sleeves extends over a cable passage (15, 16), the ends (11, 12) of the support (8) protruding from the cable passages and the glass fibre cables (2) protruding from the ends (11, 12) of the support (8).
